# EUROPÄISCHE PATENTSCHRIFT

(11) **EP 1 567 798 B1**
(45) Veröffentlichungstag und Bekanntmachung des Hinweises auf die Patenterteilung: **21.02.2007**
(21) Anmeldenummer: 03788856.7
(22) Anmeldetag: 04.12.2003
(51) Int. Cl.: F16L 27/08

(54) **VORRICHTUNG ZUM ZUFÜHREN EINES GASFÖRMIGEN UND/ODER FLÜSSIGEN MEDIUMS ZU EINEM ROTIERENDEN DRUCKSYSTEM**
DEVICE FOR FEEDING A GASEOUS AND/OR LIQUID MEDIUM TO A ROTATING PRESSURISED SYSTEM
DISPOSITIF PERMETTANT D'ACHEMINER UN MILIEU LIQUIDE ET/OU GAZEUX A UN SYSTEME ROTATIF SOUS PRESSION

(30) Priorität: 04.12.2002 DE 10256537
(43) Veröffentlichungstag der Anmeldung: 31.08.2005
(73) Patentinhaber: Christian Maier GmbH & Co. Maschinenfabrik, D-89520 Heidenheim (DE)
(72) Erfinder: MAIER, Erich, 89518 Heidenheim (DE)
(74) Vertreter: Dziewior, Joachim
(86) Internationale Anmeldenummer: PCT/DE2003/004011
(87) Internationale Veröffentlichungsnummer: WO 2004/051130

(56) Entgegenhaltungen:
- EP-A- 0 547 729
- DE-C- 4 203 954
- US-A- 4 355 827

## Beschreibung

Die Erfindung betrifft eine Vorrichtung zum Zuführen eines gasförmigen und/oder flüssigen Mediums zu einem rotierenden Drucksystem, bestehend aus einem stillstehenden Dichtkopfgehäuse mit einer Anschlußöffnung für das Medium, an die eine im Innern des Dichtkopfgehäuses verlaufende Verbindungsleitung anschließt, sowie mit einem ebenfalls im Inneren des Dichtkopfgehäuses angeordneten, mit dem Drucksystem in Verbindung stehenden rohrförmigen Rotor, ferner mit einer am Ende der Verbindungsleitung angeordneten Statordichtung und einer am Ende des Rotors angeordneten Rotordichtung, wobei die Statordichtung und die Rotordichtung koaxial zum Rotor angeordnet sind und sich gegeneinander anliegen, und wobei im Bereich der Stator- und Rotordichtung ein thermisch beeinflusstes Dehnelement ist, das eine temperaturabhängige Verstellung der gegenseitigen Lage und/oder Belastung von Stator- und Rotordichtung vornimmt, dadurch gekennzeichnet, daß das Dehnelement von einem Hülsenteil gebildet ist, das an seinem dem Drucksystem zugewandten Ende gegenüber dem Dichtkopfgehäuse fixiert ist und das mit seinem der Statordichtung zugewandten Ende an einem bei erhöhter Temperatur mit der Statordichtung in Verbindung stehenden Kupplungsring anliegt.

Vorrichtungen dieser Art dienen beispielsweise in Form von Dichtköpfen oder Drehdurchführungen der Fluidüberleitung von stehenden in rotierende Maschinenkomponenten und/oder umgekehrt. Durch die technische Weiterentwicklung steigen die Anforderungen an Drehdurchführungen stetig. Insbesondere bei Werkzeugmaschinen haben sich die Spindeldrehzahlen binnen eines Jahrzehnts von üblicherweise 4.000 bis 6.000 U/min. auf 20.000 bis 50.000 U/min. erhöht. Hinzu kommt, daß die Drücke der Medien ständig wachsen. Durch Minimalmengenschmierung und neue Einsatzgebiete, z.B. das Abblasen von Zerspanungsrückständen bei der Graphitzerspanung mittels Druckluft durch Zuführung des Mediums in das Werkzeug werden extreme Anforderungen vor allem an die Dichtungen der Drehdurchführungen gestellt.

Als besonders kritisch für die zunehmenden Anforderungen an die Lebensdauer der Drehdurchführungen zeigen sich Leckage-Ströme, die in die Lager oder in die Spindel gelangen können sowie die Überbelastung der Dichtung, z.B. durch eine irrtümliche Druckbeaufschlagung ohne Durchfluss des Mediums.

Hinzu kommt, dass es unzulässige, oft nicht mehr nachvollziehbare Einsatzbedingungen gibt, die eine deutliche Verringerung der Lebensdauer bisheriger Dreheinführungen verursachen.

Eine genauere Betrachtung der Dichtungsbelastung zeigt, dass im wesentlichen folgende Faktoren großen Einfluss haben:
- Der Druck des Mediums und damit der Druck auf die Dichtflächen
- Die Art des Mediums und dessen Schmierwirkung
- Die Drehzahl und der Durchmesser bzw. die Reibgeschwindigkeit
- Die Durchflussgeschwindigkeit und Art des Mediums und damit dessen Kühlwirkung

Alle diese Faktoren wirken sich unmittelbar auf die Temperaturentwicklung an der Dichtung aus. Geringe Temperatur bedeutet geringe Belastung, hohe Temperatur zeugt von großer Belastung der Dichtung. Als maßgeblich für die Regelung der Dichtungsbelastung wurde deswegen die Temperatur erkannt. In der Sprache der Regeltechnik heißt dies: Die Temperatur ist die Leitgröße.

Aus der US-A-4 355 827 ist bereits eine Vorrichtung der eingangs genannten Art bekannt, bei der zwei Dichtkörper mittels eines thermisch wirksamen Bimetalls in Abhängigkeit von sinkenden Temperaturen voneinander separiert werden. Nachteil dieser Lösung ist die fehlende Eignung der Konstruktion für hohe und höchste Drehzahlen des rotierenden Drucksystems sowie die Nichterfassung einer erhöhten Temperatur der Dichtung als entscheidende Leitgröße für die axiale Verstellung der Dichtkörper. Weiter ist aus der DE 4 203 954 C1 eine Drehdurchführung bekannt, bei welcher der Rotor gegenüber dem Stator manuell oder mittels eines thermisch wirksamen Bimetalls in Abhängigkeit von der Temperatur axial verstellt wird. Nachteil dieser Lösung ist die große Abhängigkeit der Regelstrecke und des Regelverhaltens vom Druck bzw. von der Verstellkraft. Zudem werden alle Dichtungsverspannungen unabhängig von der jeweiligen Belastung gleichermaßen verändert.

Der Erfindung liegt die Aufgabe zugrunde, eine Vorrichtung der eingangs genannten Art in Form einer Drehdurchführung zu schaffen, die eine hohe Lebensdauer bei unterschiedlichsten Einsatzfällen erreicht und dazu über eine Eigensicherung verfügt, so daß unabhängig vom Betriebszustand, Medium und äußeren Bedingungen ein sicherer Betrieb und eine lange Lebensdauer gewährleistet sind. Entscheidend ist dafür eine Verminderung der Dichtungs- und Lagerbelastung bei einem zudem möglichst geringen Leckage-Strom.

Diese Aufgabe wird nach der Erfindung dadurch gelöst, daß im Bereich der Stator- und Rotordichtung ein thermisch beeinflusstes Dehnelement angeordnet ist, das von einem Hülsenteil gebildet ist, das an seinem dem Drucksystem zugewandten Ende gegenüber dem Dichtkopfgehäuse fixiert ist und das mit seinem der Statordichtung zugewandten Ende an einem bei erhöhter Temperatur mit der Statordichtung in Verbindung stehenden Kupplungsring anliegt.

Der durch die Erfindung erreichte Vorteil besteht im wesentlichen darin, daß sehr kurze Regelzeiten erreicht werden. Einerseits wird eine sehr feinfühlige Regelung über die Längenveränderung erreicht. Andererseits hat die aus der Längenänderung resultierende grosse Kraft überwiegenden Einfluß auf das Regelverhalten und zwar unabhängig vom Mediendruck. Vorteilhaft ist zudem die nahezu unbegrenzte und verschleißfreie Wiederholbarkeit des thermisch bedingten Längenänderungsvorgarigs.

Da das Dehnelement somit den hinsichtlich eines Temperaturanstiegs kritischen Bereich vollständig umschließt, erfolgt eine schnelle und quantitative Umsetzung eines Temperaturanstiegs in eine Stellgröße und damit eine Lastreduzierung der Dichtungen.

Um die Empfindlichkeit der Anordnung noch zu steigern, kann das Dehnelement zumindest an seiner Innenmantelfläche mit einer Wärmestrahlung absorbierenden Oberflächenbeschichtung versehen sein.

Zur Gewährleistung einer möglichst spielfreien Anordnung wird ferner vorgeschlagen, daß der Kupplungsring dem Dehnelement unter Federkraft anliegt.

Eine weitere vorteilhafte Ausgestaltung der Erfindung besteht darin, daß der Kupplungsring einen die Statordichtung tragenden, axial verschiebbar gelagerten Dichtungsträger umschließt, der unter der Kraft einer Statorfeder die Statordichtung an die axial feststehende Rotordichtung andrückt. Dazu ist es zweckmäßig, daß der Dichtungsträger einen radial zum Kupplungsring hin vorstehenden Ringbund aufweist.

Als wesentliche und damit vorteilhafte Weiterbildung der Erfindung hat sich eine Ausführungsform erwiesen, bei der Kupplungsring aus einem Material von geringem Wärmeausdehnungskoeffizienten und der Dichtungsträger aus einem Material von demgegenüber großem Wärmeausdehnungskoeffizienten besteht, wobei bei regulärer Betriebstemperatur zwischen dem Kupplungsring und dem Dichtungsträger ein enger Ringspalt vorhanden ist. Dadurch wird erreicht, daß die Statordichtung bei regulärem Betrieb unter dem Druck der Statorfeder der Rotordichtung anliegt. Erst bei einem ein Eingreifen der Regelung erforderlich machenden Temperaturanstieg entsteht zwischen dem Kupplungsring und dem Dichtungsträger ein Reibschluß, wodurch dann das Dehnelement über den Kupplungsring und den Dichtungsträger auf die Statordichtung in dem Sinne einwirken kann, daß eine Entlastung der Dichtfläche auftritt, ohne daß jedoch ein Spalt entsteht, der wegen des Eindringens von Partikeln und dem daraus resultierenden Verschleiß unerwünscht ist.

Weiter kann es aus Gründen der Wärmeübertragung zweckmäßig sein, wenn der Ringbund des Dichtungsträgers sich zu seinem der Statordichtung zugewandten Ende hin konisch verjüngt.

Um ein unerwünschtes Eingreifen in den Regelmechanismus, also axial auf die Rotor- und Statordichtung einwirkende, durch den Druck des Mediums hervorgerufene und von diesem abhängige Kräfte zu vermeiden, ist es von Vorteil, wenn der äußere Durchmesser des im Dichtkopfgehäuse gelagerten Teils des Dichtungsträgers dem Durchmesser der den Rotor aufnehmenden Rotorbohrung entspricht und die Bohrungsdurchmesser der Rotordichtung und der Statordichtung gleich groß sind. Dadurch heben sich diese axial angreifenden Kräfte gegenseitig auf.

Damit die Rotordichtung beim regelungsbedingten Zurückziehen der Statordichtung dieser nicht nachläuft, ist die Rotordichtung mittels Bund axial gesichert und mittels Federelement gegen diese Sicherung positioniert.

Dabei hat es sich in diesem Zusammenhang noch als günstig erwiesen, wenn vor dem ersten und nach dem letzten der Lager ein Dichtspalt mit einem Ringkanal angeordnet ist, in den ein Sperrmedium mit Überdruck, z.B. Druckluft eingeleitet wird und der zumindest teilweise Verbindung zum Leckageanschluß hat.

Eine weitere vorteilhafte Ausgestaltung der Erfindung ist dadurch gekennzeichnet, daß zwischen dem Dehnelement und dem beweglich gelagerten Dichtungsträger eine bezüglich ihrer Länge rotatorisch einstellbare, thermisch betätigte Kupplung angeordnet ist.

Zweckmäßigerweise ist die Kupplung von zwei drehbar gegeneinander verstellbaren Kupplungsscheiben gebildet, von denen wenigstens eine als Keilscheibe mit einer oder mehreren umfangsseitig verlaufenden Keilflächen ausgebildet ist. Dabei können die Kupplungsscheiben mittels eines endseitig jeweils an einer der Kupplungsscheiben angeschlossenen, spiralförmigen Bi-Metall-Elementes rotatorisch verstellt werden.

Bei Ruhe bzw. Raumtemperatur befinden sich die Kupplungsscheiben so gegeneinander positioniert, daß sich eine geringstmögliche axiale Höhe der beiden Kupplungsscheiben ergibt. Während eine Kupplungsscheibe auf dem Dehnelement aufliegt und drehbar ist, befindet sich die zweite Kupplungsscheibe in Berührung mit der ersten. Das Bi-Metall-Element, das auch mit der zweiten Kupplungsscheibe verbunden ist, hat diese in eine Position gedreht, in der sich eine minimale Länge der Kupplung ergibt und keine Berührung der zweiten Kupplungsscheibe mit der axial beweglichen Dichtung bzw. dem entsprechenden Dichtungsträger besteht.

Erhöht sich die Temperatur des unmittelbar am Gleitringdichtspalt angeordneten Bi-Metall-Elements, z.B. auf Grund von Reibungswärme, so wird die zweite Kupplungsscheibe soweit auf den Keilflächen gedreht, bis Kontakt mit der axial beweglichen Dichtung bzw. dem entsprechenden Dichtungsträger besteht. Durch einen geringen Keilwinkel im Bereich der Selbsthemmung tritt nun selbst bei hoher axialer Belastung keine weitere Positionsveränderung in Rotationsrichtung auf. Die Längenausdehnung des Wärmedehnelements wirkt sich nun direkt auf die Position bzw. Kraftreduzierung der Dichtung aus.

Gemäß einer weiteren Ausgestaltungsmöglichkeit nach der Erfindung ist zwischen Kupplungsring und Dichtungsträger ein Entlastungsring angeordnet.

Dazu besteht der Kupplungsring zweckmäßigerweise aus einem Material von geringem Wärmeausdehnungskoeffizienten und der Entlastungsring aus einem Material von demgegenüber großem Wärmeausdehnungskoeffizienten, wobei bei regulärer Betriebstemperatur zwischen dem Kupplungsring und dem Entlastungsring ein enger Ringspalt vorhanden ist.

Weiter empfiehlt es sich hierbei, daß der Entlastungsring permanent mittels Federn stirnseitig an dem Dichtungsträger über einen speziell geformten ringförmigen Bund anliegt und durch metallischen Kontakt und Wärmestrahlung das Temperaturniveau vom Dichtungsträger auf den Entlastungsring übertragen wird.

Der Entlastungsring wird permanent an den Dichtungsträger leicht angedrückt. Die temperaturabhängige Belastungsregelung zwischen Stator- und Rotordichtung wird erst dann wirksam, wenn zwischen Entlastungsring und Kupplungsring infolge Erwärmung der enge, radiale Spalt eliminiert wird, so daß ein Reibschluß entsteht und zusätzlich eine Längenänderung der Dehnhülse erfolgt. Der Unterschied zur voranstehend bereits beschriebenen Lösung besteht darin, daß eine Trennung der Wirkflächen für die Kopplung und Entlastung vorgenommen wird. Bei der bereits beschriebenen Lösung erfolgt die Kopplung und Entlastung dagegen über die angrenzende Fläche zwischen Kupplungsring und Dichtungsträger.

Diese modizierte Ausführungsform sieht demgegenüber eine Kopplung zwischen Kupplungsring und Entlastungsring vor und die Entlastung erfolgt zwischen Dichtungsträger und dem ringförmigen Bund am Entlastungsring. Dies ermöglicht eine bessere Beweglichkeit des Dichtungsträgers und somit eine günstigere Betriebssicherheit der Dichtung.

Im folgenden wird die Erfindung an einem in der Zeichnung dargestellten Ausführungsbeispiel näher erläutert; es zeigen:

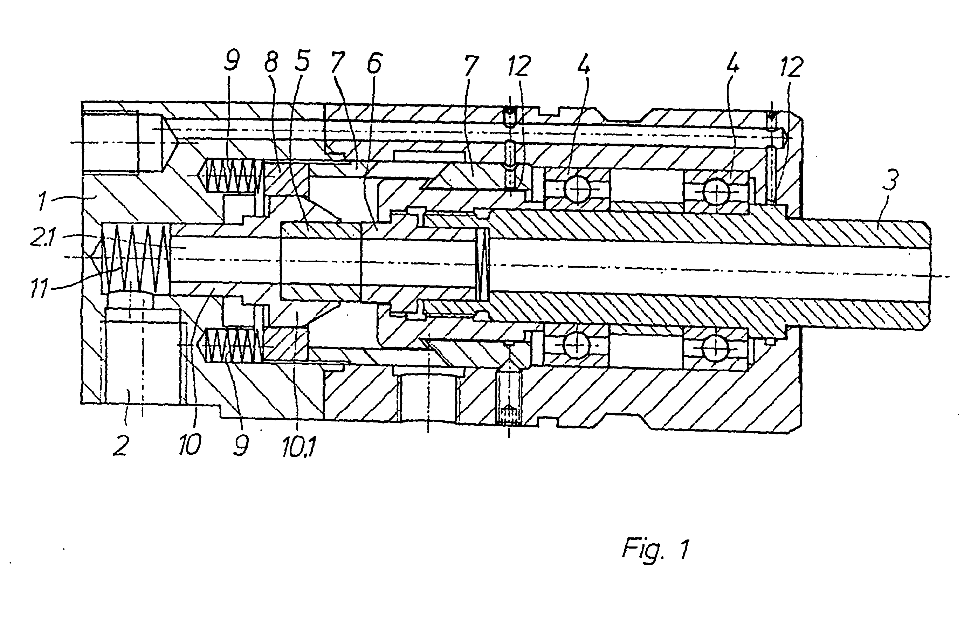

- Fig. 1: einen Querschnitt durch die Vorrichtung gemäß der Erfindung,

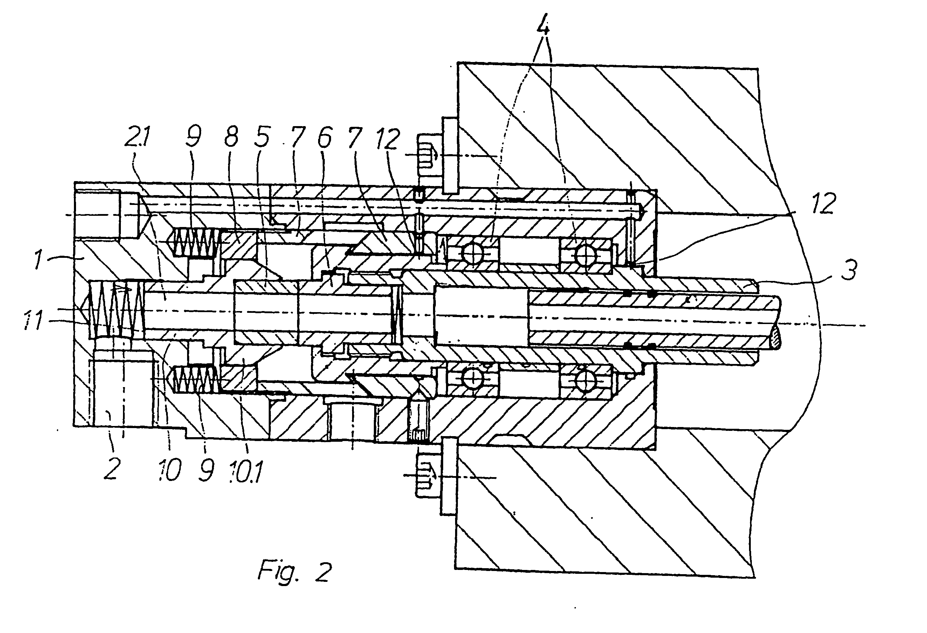

- Fig. 2: den Gegenstand nach Figur 1, eingebaut in den Stator einer Maschinenspindel,
- Fig. 3: eine alternative Ausgestaltung in der Fig. 1 entsprechender Darstellung, nur teilweise wiedergegeben,
- Fig. 4: eine weitere Ausführungsform in der Fig. 1 entsprechender Darstellung.

Die in der Zeichnung dargestellte Vorrichtung dient zum Zuführen eines gasförmigen und/oder flüssigen Mediums zu einem rotierenden Drucksystem. Sie besteht im wesentlichen aus einem stillstehenden Dichtkopfgehäuse 1 mit einer Anschlußöffnung 2 für das Medium, an die eine im Inneren des Dichtkopfgehäuses 1 verlaufende Verbindungsleitung 2.1 anschließt. Ferner weist sie einen ebenfalls im Inneren des Dichtkopfgehäuses 1 angeordneten und mit dem Drucksystem in Verbindung stehenden rohrförmigen Rotor 3 auf, der durch zwei Wälzlager 4 am stillstehenden Dichtkopfgehäuse 1 gelagert ist.

Am Ende der Verbindungsleitung 2.1 ist eine Statordichtung 5 angeordnet, während am Ende des Rotors 3 eine Rotordichtung 6 vorgesehen ist, wobei die Statordichtung 5 und die Rotordichtung 6 koaxial zum Rotor 3 angeordnet sind und sich mit ihren Stirnflächen einander anliegen. Die Stirnflächen konnen dabei - wie im Ausführungsbeispiel - plan ausgebildet sein oder auch eine konische oder ähnlich geeignete Gestalt aufweisen.

Im Bereich der Stator- und Rotordichtung 5, 6 ist ein thermisch verstellbares Dehnelement 7 angeordnet, das unmittelbar eine temperaturabhängige Verstellung der axial gegenseitigen Lage von Stator- und Rotordichtung 5, 6 vornimmt. Diese Verstellung erfolgt in dem Sinne, daß bei einer Erhöhung der Temperatur im Bereich der Dichtungen 5, 6, wodurch diese einem erhöhten Verschleiß unterworfen werden, diese durch eine minimale Erhöhung ihres gegenseitigen Abstandes entlastet werden, ohne daß jedoch eine Trennung der beiden Dichtungen 5, 6 voneinander erfolgt. Diese Entlastung findet in der Praxis im Mikrometer-Bereich statt.

Das Dehnelement 7 ist dazu von einem Hülsenteil gebildet, das an seinem dem Drucksystem zugewandten Ende gegenüber dem Dichtkopfgehäuse 1 fixiert ist. Mit seinem der Statordichtung 5 zugewandten Ende liegt das Dehnelement 7 dagegen einem mit der Statordichtung 5 in Verbindung stehenden Kupplungsring 8 an. Durch diese Art des Anschlusses kann weitestgehend die gesamte Länge des Dehnelementes 7 für eine thermisch bedingte Längenänderung und damit eine Verstellung der Dichtungen 5, 6 herangezogen werden.

Das Dehnelement 7 kann zusätzlich zumindest an seiner Innenmantelfläche mit einer Oberflächenbeschichtung zur Absorbtion von Wärmestrahlung versehen sein, wodurch eine schnellere Wärmeaufnahme und damit ein schnellerer Regelmechanismus erreicht wird.

Der Kupplungsring 8 liegt dem Dehnelement 7 unter der Einwirkung von Federn 9 spielfrei an. Weiter umschließt der Kupplungsring 8 einen axialverschiebbar gelagerten Dichtungsträger 10, der stirnseitig die Statordichtung 5 in sich aufnimmt und der unter der Kraft einer Statorfeder 11 diese Statordichtung 5 an die axial feststehende Rotordichtung 6 andrückt.

Der Dichtungsträger 10 ist zusätzlich mit einem radial zum Kupplungsring 8 hin vorstehenden Ringbund 10.1 versehen, wobei der Kupplungsring 8 und der Dichtungsträger 10 im einzelnen so gestaltet sind, daß zwischen ihnen bei regulärer Betriebstemperatur ein enger Ringspalt vorhanden ist.

Der Kupplungsring 8 besteht aus einem Material von geringem Wärmeausdehnungskoeffizienten, während der Dichtungsträger 10 aus einem Material von dem gegenüber großem Wärmeausdehnungskoeffizienten besteht. Tritt daher eine Erwärmung auf, so dehnt sich vorzugsweise der Dichtungsträger 10 insbesondere auch radial aus, wodurch der Ringspalt verkleinert wird, bis zwischen dem Dichtungsträger 10 und dem Kupplungsring 8 ein Reibschluß besteht. Von diesem Zeitpunkt an wird der Dichtungsträger 10 über den Kupplungsring 8 von dem sich in seiner Länge vergrößernden Dehnelement 7 mitgenommen, so daß die Statordichtung 5 geringfügig von der Rotordichtung 6 abgehoben wird, wobei das System jedoch so abgestimmt ist, daß hierdurch zwischen den beiden Dichtungen 5, 6 kein Spalt entsteht. Dadurch ist sichergestellt, daß keine den Verschleiß zwischen den Dichtungen 5, 6 fördernde Partikel zwischen die Rotor- und die Statordichtung 5, 6 eindringen können.

In der Folge wird die Temperatur wieder absinken, so daß sowohl das Dehnelement 7 seine Länge verringert als auch der Reibschluß zwischen dem Dichtungsträger 10 und dem Kupplungsring 8 gelöst wird. Bei einem erneuten Temperaturanstieg greift der Regelmechanismus dann in der schon beschriebenen Weise erneut ein.

Um im übrigen das Einwirken hydraulischer Kräfte, die von dem Wärmeträgermedium ausgehen, auf die Dichtungen 5, 6 auszuschließen, entspricht der äußere Durchmesser des im Dichtkopfgehäuse 1 gelagerten Teils des Dichtungsträgers 10 dem Durchmesser der den Rotor 3 aufnehmenden Rotorbohrung. Ferner sind die Bohrungsdurchmesser der Rotordichtung 6 und der Statordichtung 5 gleich groß. Dadurch wird ausgeschlossen, daß - beispielsweise bei Druckschwankungen - zusätzliche, den eigentlichen Regelmechanismus störende Kräfte auf die Dichtungen 5, 6 Einfluß haben können.

Schließlich ist vor dem ersten und nach dem letzten der beiden Lager 4 ein Dichtspalt 12 mit einem Ringkanal angeordnet, durch ein Sperrmedium wie z.B. Druckluft eingeleitet wird, und der zumindest teilweise Verbindung zum Leckageanschluß hat.

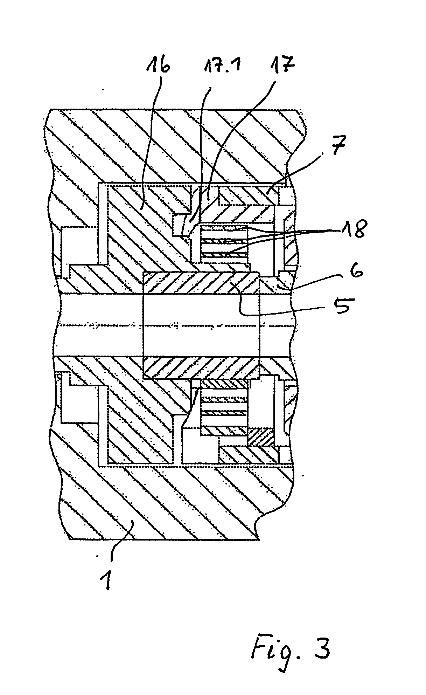

In Fig. 3 ist eine weitere Ausgestaltung der Erfindung dargestellt, bei der zwischen dem Dehnelement und dem beweglich gelagerten Dichtungsträger 10 eine bezüglich ihrer Länge rotatorisch einstellbare, thermisch betätigte Kupplung angeordnet ist. Die Kupplung ist von zwei drehbar gegeneinander verstellbaren Kupplungsscheiben 16,17 gebildet, von denen die eine als Keilscheibe mit umfangsseitig verlaufenden Keilflächen 17.1 ausgebildet ist. Die zweite Kupplungsscheibe 17 weist axial vorstehende, in der Zeichnung nicht ersichtliche Nocken auf, die zur Anlage an der Keilfläche 17.1 vorgesehen sind. Die Kupplungsscheiben 16,17 werden mittels eines endseitig jeweils an einer der Kupplungsscheiben angeschlossenen, spiralförmigen Bi-Metall-Elementes 18 rotatorisch verstellt.

Bei Ruhe bzw. Raumtemperatur sind die Kupplungsscheiben 16,17 so ausgerichtet, daß sich eine geringstmögliche axiale Höhe der beiden Kupplungsscheiben ergibt. Die eine Kupplungsscheibe 17 liegt auf dem Dehnelement 7 auf und ist drehbar. Das Bi-Metall-Element 18 hält bei Raumtemperatur die zweite Kupplungsscheibe 17 in einer Position, in der sich eine minimale Länge der Kupplung ergibt und keine Berührung der zweiten Kupplungsscheibe mit der axial beweglichen Dichtung bzw. dem entsprechenden Dichtungsträger 10 besteht.

Erhöht sich die Temperatur des unmittelbar am Gleitringdichtspalt angeordneten Bi-Metall-Elements 18, z.B. auf Grund von Reibungswärme, so wird die Kupplungsscheibe 17 soweit auf den Keilflächen gedreht, bis Kontakt mit der axial beweglichen Dichtung bzw. dem entsprechenden Dichtungsträger 10 besteht. Durch einen geringen Keilwinkel im Bereich der Selbsthemmung tritt nun selbst bei hoher axialer Belastung keine weitere Positionsveränderung in Rotationsrichtung auf. Die Längenausdehnung des Wärmedehnelements 7 wirkt sich nun direkt auf die Position bzw. Kraftreduzierung der Dichtung aus.

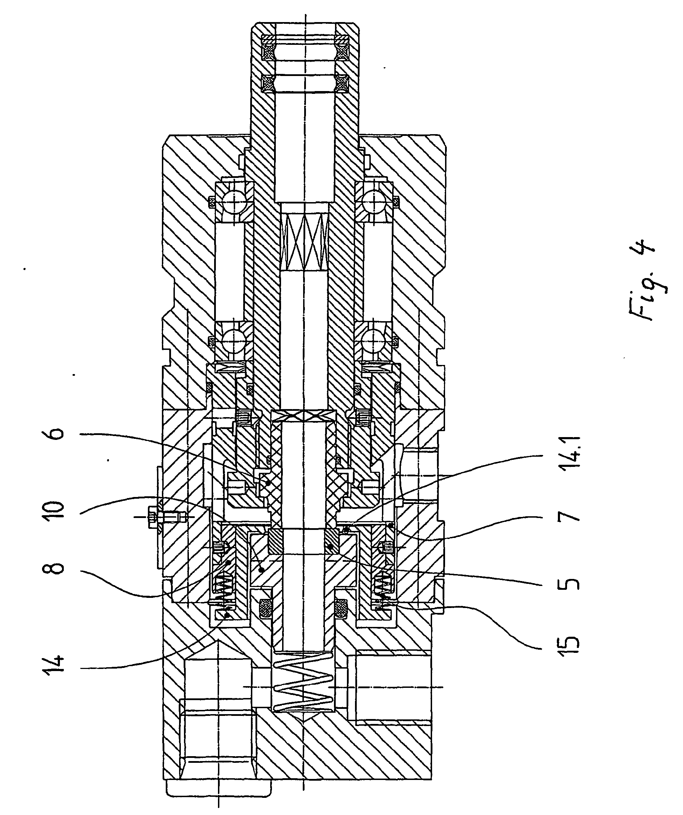

Bei der in Fig. 4 dargestellten weiteren Ausgestaltungsmöglichkeit ist zwischen Kupplungsring und Dichtungsträger 10 ein Entlastungsring 14 angeordnet.

Dazu besteht der Kupplungsring 8 aus einem Material von geringem Wärmeausdehnungskoeffizienten und der Entlastungsring 14 aus einem Material von demgegenüber großem Wärmeausdehnungskoeffizienten, wobei bei regulärer Betriebstemperatur zwischen dem Kupplungsring 8 und dem Entlastungsring 14 ein enger Ringspalt vorhanden ist.

Der Entlastungsring 14 liegt permanent mittels Federn 15 stirnseitig an dem Dichtungsträger 10 über einen speziell geformten ringförmigen Bund 14.1 an, wobei durch metallischen Kontakt und Wärmestrahlung das Temperaturniveau vom Dichtungsträger 10 auf den Entlastungsring 14 übertragen wird.

Der Entlastungsring 14 wird permanent an den Dichtungsträger 10 leicht angedrückt. Die temperaturabhängige Belastungsregelung zwischen Stator- und Rotordichtung wird erst dann wirksam, wenn zwischen Entlastungsring 14 und Kupplungsring 8 infolge Erwärmung der enge, radiale Spalt eliminiert wird, so daß ein Reibschluß entsteht und zusätzlich eine Längenänderung der Dehnhülse 7 erfolgt. Der Unterschied zur voranstehend bereits beschriebenen Lösung besteht darin, daß eine Trennung der Wirkflächen für die Kopplung und Entlastung vorgenommen wird. Bei der bereits beschriebenen Lösung erfolgt die Kopplung und Entlastung dagegen über die angrenzende Fläche zwischen Kupplungsring 8 und Dichtungsträger 10.

Diese modizierte Ausführungsform sieht demgegenüber eine Kopplung zwischen Kupplungsring 8 und Entlastungsring 14 vor. Die Entlastung erfolgt zwischen Dichtungsträger 10 und dem ringförmigen Bund 14.1 am Entlastungsring 14. Dies ermöglicht eine bessere Beweglichkeit des Dichtungsträgers 10 und somit eine günstigere Betriebssicherheit der Dichtung.

## Patentansprüche

1. Vorrichtung zum Zuführen eines gasförmigen und/oder flüssigen Mediums zu einem rotierenden Drucksystem, bestehend aus einem stillstehenden Dichtkopfgehäuse (1) mit zumindest einer Anschlußöffnung (2) für das Medium, an die eine im Innern des Dichtkopfgehäuses (1) verlaufende Verbindungsleitung (2.1) anschließt, sowie mit einem ebenfalls im Inneren des Dichtkopfgehäuses (1) angeordneten, mit dem Drucksystem in Verbindung stehenden rohrförmigen Rotor (3), ferner mit einer am Ende der Verbindungsleitung (2.1) angeordneten Statordichtung (5) und einer am Ende des Rotors (3) angeordneten Rotordichtung (6), wobei die Statordichtung (5) und die Rotordichtung (6) koaxial zum Rotor (3) angeordnet sind und gegeneinander anliegen und daß im Bereich der Stator- und Rotordichtung (5, 6) ein thermisch beeinflusstes Dehnelement (7) angeordnet ist, das eine temperaturabhängige Verstellung der gegenseitigen Lage und/oder Belastung von Stator- und Rotordichtung (5, 6) vornimmt,
**dadurch gekennzeichnet, daß** das Dehnelement (7) von einem Hülsenteil gebildet ist, das an seinem dem Drucksystem zugewandten Ende gegenüber dem Dichtkopfgehäuse (1) fixiert ist und das mit seinem der Statordichtung (5) zugewandten Ende an einem bei erhöhter Temperatur mit der Statordichtung (5) in Verbindung stehenden Kupplungsring (8) anliegt.

2. Vorrichtung nach Anspruch 1, **dadurch gekennzeichnet, daß** das Dehnelement (7) zumindest an seiner Innenmantelfläche mit einer Wärmestrahlung absorbierenden Oberflächenbeschichtung und/oder oberflächenvergrößernden Struktur versehen ist.

3. Vorrichtung nach Anspruch 1 oder 2, **dadurch gekennzeichnet, daß** der Kupplungsring (8) an dem Dehnelement (7) unter Federkraft anliegt.

4. Vorrichtung nach zumindest einem der Ansprüche 1 bis 3, **dadurch gekennzeichnet, daß** der Kupplungsring (8) einen die Statordichtung (5) tragenden, axial verschiebbar gelagerten Dichtungsträger (10) umschließt, der unter der Kraft einer Statorfeder (11) die Statordichtung (5) an die axial feststehende Rotordichtung (6) andrückt.

5. Vorrichtung nach Anspruch 4, **dadurch gekennzeichnet, daß** der Dichtungsträger (10) einen radial zum Kupplungsring (8) hin vorstehenden Ringbund (10.1) aufweist.

6. Vorrichtung nach Anspruch 4 oder 5, **dadurch gekennzeichnet, daß** der Kupplungsring (8) aus einem Material von geringem Wärmeausdehnungskoeffizienten und der Dichtungsträger (10) aus einem Material von demgegenüber großem Wärmeausdehnungskoeffizienten besteht, und daß bei regulärer Betriebstemperatur zwischen dem Kupplungsring (8) und dem Dichtungsträger (10) ein enger Ringspalt vorhanden ist.

7. vorrichtung nach zumindest einem der Ansprüche 4 bis 6, **dadurch gekennzeichnet, daß** der Ringbund (10.1) des Dichtungsträgers (10) sich zu seinem der Statordichtung (5) zugewandten Ende hin konisch verjüngt.

8. Vorrichtung nach zumindest einem der Ansprüche 1 bis 7, **dadurch gekennzeichnet, daß** der äußere Durchmesser des im Dichtkopfgehäuse (1) gelagerten Teils des Dichtungsträgers (10) dem Durchmesser der den Rotor (3) aufnehmenden Rotorbohrung entspricht und die Bohrungsdurchmesser der Rotordichtung (6) und der Statordichtung (5) gleich groß sind.

9. Vorrichtung nach zumindest einem der Ansprüche 1 bis 8, **dadurch gekennzeichnet, daß** vor dem ersten und nach dem letzten der Lager (4) ein Dichtspalt (12) mit einem Ringkanal angeordnet ist, in den ein Sperrmedium, z.B. Druckluft eingeleitet wird und der zumindest teilweise Verbindung zum Leckageanschluß hat.

10. Vorrichtung nach zumindest einem der Ansprüche 1 bis 9, **dadurch gekennzeichnet, daß** die Rotordichtung (6) mittels Bund axial gesichert und mittels Federelement gegen diese Sicherung positioniert ist.

11. Vorrichtung nach zumindest einem der Ansprüche 4 bis 10, **dadurch gekennzeichnet, daß** zwischen dem Dehnelement (7) und dem beweglich gelagerten Dichtungsträger (10) eine bezüglich ihrer Länge rotatorisch einstellbare, thermisch betätigte Kupplung angeordnet ist.

12. Vorrichtung nach Anspruch 11, **dadurch gekennzeichnet, daß** die Kupplung von zwei drehbar gegeneinander verstellbaren Kupplungsscheiben (16,17) gebildet ist, von denen wenigstens eine als Keilscheibe mit einer umfangsseitig verlaufenden Keilfläche (17.1) ausgebildet ist.

13. Vorrichtung nach Anspruch 12, **dadurch gekennzeichnet**, die Kupplungsscheiben (16,17) mittels eines endseitig jeweils an einer der Kupplungsscheiben angeschlossenen, spiralförmigen Bi-Metall-Elementes (18) rotatorisch verstellt werden.

14. Vorrichtung nach Anspruch 1 bis 10, **dadurch gekennzeichnet, daß** zwischen Kupplungsring (8) und Dichtungsträger (10) ein Entlastungsring (14) angeordnet ist.

15. Vorrichtung nach Anspruch 14, **dadurch gekennzeichnet, daß** der Kupplungsring (8) aus einem Material von geringem Wärmeausdehnungskoeffizienten und der Entlastungsring (14) aus einem Material von demgegenüber großem Wärmeausdehnungskoeffizienten besteht und daß bei regulärer Betriebstemperatur zwischen dem Kupplungsring (8) und dem Entlastungsring (14) ein enger Ringspalt vorhanden ist.

16. Vorrichtung nach Anspruch 15, **dadurch gekennzeichnet, daß** der Entlastungsring (14) permanent mittels Federn (15) stirnseitig an den Dichtungsträger (10) über einen speziell geformten ringförmigen Bund (14.1) anliegt und durch metallischen Kontakt und Wärmestrahlung das Temperaturniveau vom Dichtungsträger (10) auf den Entlastungsring (14) übertragen wird.

## Claims

1. Apparatus for feeding a gaseous and/or liquid medium to a rotating pressure system, comprising a stationary sealing head housing (1) with at least one connection opening (2) for the medium, to which a connecting conduit (2.1) which extends in the interior of the sealing head housing (1) connects, and a tubular rotor (3) which is also arranged in the interior of the sealing head housing (1) and which is connected to the pressure system, and further comprising a stator seal (5) arranged at the end of the connecting conduit (2.1) and a rotor seal (6) arranged at the end of the rotor (3), wherein the stator seal (5) and the rotor seal (6) are arranged coaxially with respect to the rotor (3) and bear against each other and arranged in the region of the stator and rotor seals (5, 6) is a thermally influenced expansion element (7) which effects temperature-dependent displacement of the mutual position and/or loading of the stator and rotor seals (5, 6),
**characterised in that** the expansion element (7) is formed by a sleeve portion which is fixed at its end towards the pressure system with respect to the sealing head housing (1) and which with its end towards the stator seal (5) bears against a coupling ring (8) which at elevated temperature is connected to the stator seal (5).

2. Apparatus according to claim 1 **characterised in that** the expansion element (7) is provided at least at its inner peripheral surface with a heat radiation-absorbing surface coating and/or surface area-increasing structure.

3. Apparatus according to claim 1 or claim 2 **characterised in that** the coupling ring (8) bears against the expansion element (7) under a spring force.

4. Apparatus according to at least one of claims 1 to 3 **characterised in that** the coupling ring (8) encloses a seal carrier (10) which carries the stator seal (5) and which is axially displaceably supported and which under the force of a stator spring (11) presses the stator seal (5) against the axially stationary rotor seal (6).

5. Apparatus according to claim 4 **characterised in that** the seal carrier (10) has an annular collar (10.1) projecting radially towards the coupling ring (8).

6. Apparatus according to claim 4 or claim 5 **characterised in that** the coupling ring (8) comprises a material with a low coefficient of thermal expansion and the seal carrier (10) comprises a material of a coefficient of thermal expansion which is high in relation thereto and that there is a narrow annular gap at normal operating temperature between the coupling ring (8) and the seal carrier (10).

7. Apparatus according to at least one of claims 4 to 6 **characterised in that** the annular collar (10.1) of the seal carrier (10) tapers conically towards its end towards the stator seal (5).

8. Apparatus according to at least one of claims 1 to 7 **characterised in that** the outside diameter of the part of the seal carrier (10) which is supported in the sealing head housing (1) corresponds to the diameter of the rotor bore accommodating the rotor (3) and the bore diameters of the rotor seal (6) and the stator seal (5) are the same.

9. Apparatus according to at least one of claims 1 to 8 **characterised in that** arranged in front of the first and after the last of the bearings (4) is a sealing gap (12) having an annular passage into which a blocking medium, for example compressed air, is introduced and which at least partially communicates with the leakage connection.

10. Apparatus according to at least one of claims 1 to 9 **characterised in that** the rotor seal (6) is axially secured by means of a collar and is positioned against said securing means by means of a spring element.

11. Apparatus according to at least one of claims 4 to 10 **characterised in that** arranged between the expansion element (7) and the movably supported seal carrier (10) is a thermally actuated coupling which is rotationally adjustable with respect to its length.

12. Apparatus according to claim 11 **characterised in that** the coupling is formed by two coupling discs (16, 17) which are rotatably displaceable with respect to each other and of which one is in the form of a wedge disc with a peripherally extending wedge surface (17.1).

13. Apparatus according to claim 12 **characterised in that** the coupling discs (16, 17) are rotationally displaced by means of a spiral-shaped bimetal element (18) which is connected at each end to a respective one of the coupling discs.

14. Apparatus according to claims 1 to 10 **characterised in that** a stress relief ring (14) is arranged between the coupling ring (8) and the seal carrier (10).

15. Apparatus according to claim 14 **characterised in that** the coupling ring (8) comprises a material with a low coefficient of thermal expansion and the stress relief ring (14) comprises a material with a coefficient of thermal expansion which is high in relation thereto and that there is a narrow annular gap at normal operating temperature between the coupling ring (8) and the stress relief ring (14).

16. Apparatus according to claim 15 **characterised in that** the stress relief ring (14) bears permanently by means of springs (15) at its end against the seal carrier (10) by way of a specially shaped annular collar (14.1) and the temperature level is transmitted from the seal carrier (10) to the stress relief ring (14) by metallic contact and heat radiation.

## Revendications

1. Dispositif permettant d'acheminer un fluide liquide et/ou gazeux à un système rotatif sous pression dans lequel:
- un boîtier de tête d'étanchéité (1) est fixe et présente pour le fluide une ouverture de raccordement (2) à laquelle fait suite une conduite de liaison (2.1) située à l'intérieur du boîtier (1),
- un rotor annulaire (3) est situé également à l'intérieur du boîtier (1) et relié au système de pression,
- un joint d'étanchéité de stator (5) est monté à l'extrémité de la conduite de liaison (2.1) et un joint d'étanchéité de rotor (6) est monté à l'extrémité du rotor (3), ces deux joints (5, 6) étant coaxiaux au rotor (3) et appliqués l'un sur l'autre,
- dans la zone des joints d'étanchéité de stator et de rotor (5, 6) est disposé un élément de dilatation (7) soumis à l'action de la chaleur et qui produit en fonction de celle-ci un déplacement de la position relative et/ou de la charge des joints d'étanchéité de stator et de rotor (5, 6),
**caractérisé en ce que** l'élément de dilatation (7) est constitué par une partie de douille qui, à son extrémité située à côté du système de pression, est fixée par rapport au boîtier de tête d'étanchéité (1), tandis que par son extrémité située du côté du joint d'étanchéité de stator (5) elle est appliquée sur une bague d'accouplement (8) qui, quand la température augmente, est en liaison avec le joint d'étanchéité de stator (5).

2. Dispositif selon la revendication 1, **caractérisé en ce que** l'élément de dilatation (7) présente au moins sur sa surface interne un revêtement absorbant le rayonnement thermique et/ou une structure augmentant la surface.

3. Dispositif selon la revendication 1 ou 2, **caractérisé en ce que** la bague d'accouplement (8) est appliquée par la force d'un ressort sur l'élément de dilatation (7).

4. Dispositif selon au moins une des revendications 1 à 3, **caractérisé en ce que** la bague d'accouplement (8) entoure un support de joint d'étanchéité (10) portant le joint d'étanchéité de stator (5) qui peut coulisser axialement et, sous l'action d'un ressort de stator (11), ce support applique le joint d'étanchéité de stator (5) sur le joint d'étanchéité de rotor (6) axialement fixe.

5. Dispositif selon la revendication 4, **caractérisé en ce que** le support de joint d'étanchéité (10) présente un collet annulaire (10.1) faisant saillie radialement en direction de la bague d'accouplement (8).

6. Dispositif selon la revendication 4 ou 5, **caractérisé en ce que** la bague d'accouplement (8) est faite d'un matériau à faible coefficient de dilatation thermique et le support de joint d'étanchéité (10) est fait d'un matériau de coefficient de dilatation thermique plus élevé, une fente annulaire étroite existant à une température de fonctionnement régulière entre la bague d'accouplement (8) et le support de joint d'étanchéité (10).

7. Dispositif selon au moins une des revendications 4 à 6, **caractérisé en ce que** le collet annulaire (10.1) du support de j oint d'étanchéité (10) a son extrémité en regard du joint d'étanchéité de stator (5) qui s'amincit en forme de cône.

8. Dispositif selon au moins une des revendications 1 à 7, **caractérisé en ce que** le diamètre externe de la partie du support de joint d'étanchéité (10) montée dans le boîtier de tête d'étanchéité (1) correspond au diamètre de l'alésage accueillant le rotor (3), les diamètres du joint d'étanchéité de rotor (6) et du joint d'étanchéité de stator (5) étant égaux.

9. Dispositif selon au moins une des revendications 1 à 8, **caractérisé en ce que** devant le premier et derrière le dernier des paliers (4) se trouve une fente d'étanchéité (12) avec un canal annulaire dans lequel peut être introduit un fluide de blocage, par exemple de l'air comprimé, et qui a au moins partiellement une liaison avec le raccord de fuite.

10. Dispositif selon au moins une des revendications 1 à 9, **caractérisé en ce que** le joint d'étanchéité de rotor (6) est sécurisé axialement par un collet et positionné par rapport à cette sécurisation par l'intermédiaire d'un élément élastique

11. Dispositif selon au moins une des revendications 4 à 10, **caractérisé en ce qu'**entre l'élément de dilatation (7) et le support d'étanchéité (10) mobile, est disposé un accouplement actionné thermiquement et qui peut être réglé en rotation en ce qui concerne sa longueur.

12. Dispositif selon la revendication 11, **caractérisé en ce que** l'accouplement est constitué de deux disques d'accouplement (16, 17), mobiles en rotation l'un par rapport à l'autre, et dont l'un au moins est un disque en coin avec une portée périphérique en coin (17.1).

13. Dispositif selon la revendication 12, **caractérisé en ce que** les disques d'accouplement (16, 17) peuvent être déplacés chacun en rotation par l'intermédiaire d'un élément bilame en forme de spirale raccordé par chaque extrémité à un des disques d'accouplement.

14. Dispositif selon la revendication 1 à 10, **caractérisé en ce qu'**une bague de décharge (14) est montée entre la bague d'accouplement (8) et le support de joint d'étanchéité (10).

15. Dispositif selon la revendication 14, **caractérisé en ce que** la bague d'accouplement (8) est faite d'un matériau à faible coefficient de dilatation et la bague de décharge (14) est faite d'un matériau à coefficient de dilatation plus élevé, une fente annulaire étroite existant entre la bague (8) et la bague (14) à une température de fonctionnement régulière.

16. Dispositif selon la revendication 15, **caractérisé en ce que** la bague de décharge (14) est, par l'intermédiaire de ressorts (15), appliquée en permanence frontalement sur le support de joint d'étanchéité (10) par l'intermédiaire d'un collet annulaire (14.1) de forme spécifique, et le niveau de température est transmis du support de joint d'étanchéité (10) à la bague de décharge (14) par contact métallique et rayonnement thermique.
